# EUROPÄISCHE PATENTSCHRIFT

(11) **EP 0 965 672 B1**
(45) Veröffentlichungstag und Bekanntmachung des Hinweises auf die Patenterteilung: **19.09.2001**
(21) Anmeldenummer: 99109377.4
(22) Anmeldetag: 02.06.1999
(51) Int. Cl.: D04H 1/64, D04H 1/58, D06M 15/227, D06M 15/333, C08L 31/02, C08L 29/04

(54) **Faserbindepulver-Zusammensetzung und Verwendung für die Verfestigung von Fasermaterialien**
Composition of powdered fiber-binder and use for binding fiber material
Composition pulvérente de liant pour fibres et application pour la consolidation de matériaux fibreux

(30) Priorität: 19.06.1998 DE 19827475
(43) Veröffentlichungstag der Anmeldung: 22.12.1999
(73) Patentinhaber: Wacker-Chemie GmbH, 81737 München (DE)
(72) Erfinder: Kohlhammer, Klaus, Dr., 84533 Marktl (DE); Kögler, Gerhard, Dr., 84508 Burgkirchen (DE); Seidl, Susanne, 84513 Töging (DE); Gruber, Sabine, 84529 Tittmoning (DE); Pröbstl, Herbert, 5280 Braunau (AT)
(74) Vertreter: Schuderer, Michael, Dr.

(56) Entgegenhaltungen:
- EP-A- 0 829 509
- WO-A-94/20661
- DE-A- 2 261 402
- DE-A- 4 431 343
- DE-A- 19 545 608

## Beschreibung

Die Erfindung betrifft Faserbindepulver-Zusammensetzungen zur Verwendung für die Verfestigung von Fasermaterialien, sowie Verfahren zur Verfestigung unter Verwendung der Faserbindepulver-Zusammensetzungen.

Textile Flächengebilde, die nach den üblichen Methoden zur Herstellung von Nonwovens wie beispielsweise nach dem Airlay-, Wetlay-, oder Spunlay-Verfahren produziert werden, benötigen ein Bindemittel zur dauerhaften Fixierung der Fasern sowie zur Erhöhung der Widerstandsfähigkeit gegenüber mechanischer Belastung. Diese Bindemittel basieren üblicherweise auf synthetischen, hochmolekularen Verbindungen und können nach dem Stand der Technik entweder in Form von Feststoffen, wie beispielsweise als Pulver, als Granulat oder als Fasern, oder in Form von Flüssigkeiten wie beispielsweise wäßrige Polymerdispersionen oder Lösungen aufgebracht werden. Die erhöhte Festigkeit der Nonwovens resultiert aus der Bindung der Fasern durch die Polymeren, die an der Faser haften und so die Fasergebilde verstärken.

Werden die Fasern mittels eines Naßlegeprozesses (Wetlay-Verfahren) abgelegt, so ist es häufig wünschenswert, das Bindemittel bereits zusammen mit den Fasern in die wäßrige Flotte einzubringen. In diesem Falle werden besondere Anforderungen an das Bindersystem gestellt. Zunächst sollte das Bindemittel im Wasser zusammen mit den Fasern feinst verteilt werden können, wobei insbesondere das Dispergieren oder das Suspendieren des meist partikelförmigen Binders im Wasser gewährleistet sein muß. Ferner sollte der Binder bereits in der wäßrigen Flotte eine sehr gute Faserhaftung aufweisen, um beim Ablegen der Fasern nicht zusammen mit der wäßrigen Flotte ausgewaschen zu werden. Da bei erhöhten Temperaturen häufig auch die Glasoder die Schmelztemperaturen der Bindemittel überschritten werden, bedarf es einer dauerhaften chemischen Vernetzung der Bindemittel, um den Fasergebilden auch eine Formbeständigkeit bei höheren Temperaturen zu verleihen. Deshalb soll das Bindemittel über eine chemische Vernetzungsreaktion eine dauerhafte Fixierung der Fasern innerhalb des textilen Flächengebildes gewährleisten. Derartige Eigenschaften sind insbesondere bei der Vorbindung naß abgelegter Glasfasern von Vorteil.

Aus der WO-A 90/14457 ist eine Verfahrensweise bekannt, bei der Glasfasern nach einem Krempelschritt mit thermoplastischem Pulver, beispielsweise Polypropylen, Polyester oder Polyamid vermischt werden und das Fasergebilde anschließend bei erhöhter Temperatur und unter Druck verfestigt wird. Vom Naßlegeverfahren wird wegen der Gefahr des Auswaschens des Bindemittels abgeraten. Die AU-B 36659/89 beschreibt ebenfalls die Verfestigung von Glasfasermaterialien mittels thermoplastischen Pulvern. Hier wird der Einsatz von Polyestern oder Polystyrol empfohlen. Dieses Bindersystem ist allerdings nicht auf ein Naßlegeverfahren übertragbar. So ist insbesondere die geringe Festigkeit derartig gebundener Fasergebilde bei Kontakt mit Wasser oder Lösungsmitteln äußerst nachteilig.

Selbstvernetzende redispergierbare Dispersionspulver auf Basis von Vinylester-Copolymerisaten oder (Meth-)acrylsäureester-Copolymerisaten als Mittel zur Faserbindung sind in der EP-B 687317 (US-A 5668216) beschrieben. Nachteilig bei diesem Bindersystem ist seine relativ gute Redispergierbarkeit in wäßrigen Systemen. Infolgedessen wird der Binder beim Ablegen der Fasern aus der wäßrigen Flotte ausgewaschen und steht nicht mehr zur Faserbindung zur Verfügung.

Aus der EP-A 721004 sind vernetzbare, in Wasser dispergierbare Pulver zur Herstellung von Polymerfilmen und Beschichtungen bekannt, die sowohl filmbildende Polymere mit mindestens einer funktionellen Gruppe als auch reaktive Verbindungen enthalten, die nach dem Dispergieren in Wasser eine nichtionische, chemische Bindung miteinander ausbilden. Insbesondere eignet sich diese Polymermischung für Anwendungen zum Beschichten, wenn zuvor das Bindemittel in Wasser dispergiert wurde. Eine Anwendung zum Zwecke der Faserbindung in Nonwovens wird in dieser Patentanmeldung nicht diskutiert. Nachteilig bei diesen Bindesystemen ist ihre gute Redispergierbarkeit in Wasser, infolgedessen der Binder beim Naßlegeprozeß ausgewaschen wird, bevor es zur Anbindung an die Fasern kommt.

In Wasser redispergierbare Polymerpulver für den Einsatz in KLebstoffen und bauchemischen Produkten sind aus der DE-A 19545608 bekannt. Die Pulver sind mit Polyvinylalkohol stabilisiert und enthalten als Vernetzerkomponente wasserlösliche, bifunktionelle, maskierte Aldehyde. Die Freisetzung der Aldehydfunktionen kann gegebenenfalls noch durch die Zugabe von Brönstedt- und Lewissäuren gefördert werden.

Der Erfindung lag die Aufgabe zugrunde, Bindemittel für die Verfestigung von naß abgelegten Fasermaterialien, insbesondere Glasfasern, zur Verfügung zu stellen, die als Pulver zusammen mit den Fasern in die wäßrige Flotte gegeben werden können und nach dem Ablegen der Fasern eine dauerhafte Verfestigung des faserigen Flächengebildes gewährleisten. Ferner lag der Erfindung die Aufgabe zugrunde, ein Bindemittel zu entwickeln, das als Pulver zusammen mit Fasern in einem trockenen Prozeß gemischt und abgelegt (Airlay, Krempel) und anschließend durch einen Befeuchtungsschritt (Tauchen, Pflatschen, Dämpfen) in seiner Funktion als Binder aktiviert werden kann und eine dauerhafte Verfestigung des textilen Flächengebildes sicherstellt.

Gelöst wurde diese Aufgabe durch die Entwicklung eines in wäßriger Flotte suspendierbaren Bindemittels auf der Basis einer trockenen, pulverförmigen, thermoplastischen Polymerzubereitung, basierend einerseits auf einem Polyvinylalkohol-stabilisierten Polymerisat, und andererseits einer reaktiven Komponente, die mit Polyvinylalkohol eine dauerhafte chemische Verbindung eingehen kann.

Gegenstand der Erfindung ist eine Faserbindepulver-Zusammensetzung zur Verwendung für die Verfestigung von Fasermaterialien enthaltend
a) ein Polymerpulver auf der Basis eines Polyvinylalkohol-stabilisierten Polymerisats von einem oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide, Olefine, Diene, und
b) eine bei Raumtemperatur (23°C) feste anorganische Verbindung, die mit den OH-Gruppen des Polyvinylalkohols nach dem Einbringen des Pulvers in Wasser eine chemische Bindung eingeht, wobei keine wasserlösliche, mindestens bifunktionelle, maskierte Aldehyde mit wenigstens 3 kohlenstoffatomen enthalten sind.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1.3-Butadien und Isopren.

Gegebenenfalls können noch 0.05 bis 10.0 Gew%, bezogen auf das Gesamtgewicht der Monomeren, Hilfsmonomere aus der Gruppe umfassend ethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und N-Vinylpyrrolidon copolymerisiert werden. Weitere Beispiele für Hilfsmonomere in den angegebenen Mengen sind Alkoxysilanfunktionelle Monomere wie Acryloxypropyltri(alkoxy)- und Methacryloxypropyltri (alkoxy)-Silane, Vinyltrialkoxysilane und Vinylmethyldialkoxysilane, vorzugsweise Vinyltriethoxysilan und gamma-Methacryloxypropyltriethoxysilan. Geeignet sind auch Zusatzvernetzer wie Acrylamidoglykolsäure (AGA), Methacrylamidoglykolsäuremethylester (MAGME), N-Methylolacrylamid (NMA), N-Methylolmethacrylamid (NMMA), N-Methylolallylcarbamat, Alkylether von N-Methylolacrylamid oder N-Methylolmethacrylamid sowie deren Isobutoxyether oder n-Butoxyether.

Die Polymerzusammensetzung wird im allgemeinen so gewählt, daß eine Glasübergangstemperatur Tg von -40°C bis +90°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 3rd Edition, J. Wiley & Sons, New York (1989) aufgeführt.

Als Polymerisate werden die nachstehend aufgeführten bevorzugt, wobei sich die Angaben in Gewichtsprozent, gegebenenfalls mit dem Hilfsmonomeranteil, auf 100 Gew% aufaddieren:
Aus der Gruppe der Vinylester-Polymerisate
Vinylacetat-Polymerisate;
Vinylacetat-Ethylen-Copolymere mit einem Ethylengehalt von 1 bis 60 Gew%;
Vinylester-Ethylen-Vinylchlorid-Copolymere mit einem Ethylengehalt von 1 bis 40 Gew% und einem Vinylchlorid-Gehalt von 20 bis 90 Gew%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}, VeoVa11^{R}), enthalten sind;
Vinylacetat-Copolymere mit 1 bis 50 Gew% eines oder mehrerer copolymerisierbarer Vinylester wie Vinyllaurat, Vinylpivalat,
Vinyl-2-ethylhexansäureester, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew% Ethylen enthalten;
Vinylester-Acrylsäureester-Copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;
Vinylester-Acrylsäureester-Copolymerisate mit 30 bis 75 Gew% Vinylacetat, 1 bis 30 Gew% Vinyllaurat oder Vinylester einer alpha-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten.

Aus der Gruppe der (Meth)acrylsäurepolymerisate Polymerisate von n-Butylacrylat oder 2-Ethylhexylacrylat; Copolymerisate von Methylmethacrylat mit n-Butylacrylat und/oder 2-Ethylhexylacrylat.

Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/AcrylatCopolymere.
Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew%.

Die Herstellung der Polymerisate erfolgt in bekannter Weise nach dem Emulsionspolymerisationsverfahren und anschließender Trocknung der damit erhältlichen wäßrigen Polymerdispersionen beispielsweise mittels Sprühtrocknung nach der in der EP-B 687317 beschriebenen Verfahrensweise, deren diesbezügliche Offenbarung Teil der vorliegenden Anmeldung sein soll.

Zur Stabilisierung der Polymerisate werden teilhydrolisierte oder vollhydrolisierte Polyvinylalkohole, vorzugsweise teilhydrolisierte Polyvinylalkohole mit einem Hydrolysegrad von 75 bis 99 Mol%, und einer Höpplerviskosität (4 %-ige wässrige Lösung, DIN 53015, Methode nach Höppler bei 20°C) von 1 bis 60 mPas, vorzugsweise 4 bis 35 mPas eingesetzt. Im allgemeinen beträgt der Polyvinylalkoholanteil von 1 bis zu 30 Gew%, bezogen auf das Polymerisat. Der Polyvinylalkohol-Anteil kann dabei während der Polymerisation zugegebenen werden oder erst nach Abschluß der Polymerisation, das heißt vor oder während der Sprühtrocknung.

Als anorganische Verbindung b) geeignet sind bei Raumtemperatur pulverförmige, wasserlösliche Verbindungen von Bor, Aluminium, Chrom und Zirkonium, deren Wasserlöslichkeit bei Normalbedingungen mindestens 1 g pro Liter Wasser beträgt. Beispiele hierfür sind Borsäure, Borax, Borsäurekomplexe, Aluminiumnitrat, Aluminiumchlorid, Zirkonoxychlorid, Zirkoniumacetat. Bevorzugt werden Borsäure (B(OH)₃), Borax (Na₂B₄O₇x10H₂O) sowie Borsäurekomplexe mit zwei- und mehrzähnigen Liganden, beispielsweise mit aliphatischen und alicyclischen Polyolen wie die Borsäurekomplexe mit Pentaerythrit und Weinsäure.

Die Menge an reaktiver anorganischer Komponente b) ist vom angestrebten Vernetzungsgrad des Polyvinylalkohols abhängig. Im allgemeinen werden 0.1 bis 30 Gew%, vorzugsweise 1 bis 15 Gew%, jeweils bezogen auf das Gesamtgewicht der Faserbindepulver-Zusammensetzung, eingesetzt.

Zu den Faserbindepulver-Zusammensetzungen können gegebenenfalls noch Pigmente, Antioxidantien, Farbstoffe, Weichmacher, Puffer, Filmbildehilfsmittel, Füllstoffe, Flammschutzmittel, Schaumbildehilfsmittel, Schauminhibitoren, Netzmittel, Thermosensibilisierungsmittel, Antistatika, Biozide, Griffverbesserungsmittel in dazu üblichen Mengen zugegeben werden. Vorzugsweise werden pulverförmige, wasserlösliche Substanzen als pH-Puffer zugegeben.

Die Faserbindepulver-Zusammensetzung eignet sich zur Verfestigung von natürlichen und synthetischen Fasermaterialien. Eine Beschränkung bei der Auswahl an Fasermaterialien besteht a priori nicht; es kommen alle Faserrohstoffe in Betracht, die in der Nonwoven-Industrie zum Einsatz kommen, beispielsweise Polyester-, Polyamid-, Polypropylen-, Polyethylen-, Glas-, Keramik-, Viskose-, Carbon-, Cellulose-, Baumwolle-, Wolle- und Holzfasern. Bevorzugt werden Polyester-, Polyamid-, Glas-, Cellulose-, Baumwolle-, Wolle- und Holzfasern. Die Fasermaterialien können als Fasern, Garne, Gewirre, Gelege oder in Form von gewebten Textilien (Gewebe) eingesetzt werden.

Die Faserbindepulver-Zusammensetzung kann in Naßlegeverfahren, in Trockenlegeverfahren unter anschließender Befeuchtung und zur Kaschierung von Fasermaterialien verwendet werden. Die Komponenten a) und b) der Faserbindepulver-Zusammensetzung können als Mischung oder getrennt zum Fasermaterial zugegeben werden. Im Naßlege- bzw. Trockenlegeverfahren beträgt die Einsatzmenge an Faserbindemittel 1 bis 50 Gew%, vorzugsweise 5 bis 30 Gew%, jeweils bezogen auf das Gesamtgewicht des textilen Flächengebildes. Bei der Kaschierung werden im allgemeinen Auftragsgewichte von 1 bis 1000 g/m², vorzugsweise 5 bis 100 g/m² und besonders bevorzugt 10 bis 50 g/m² eingesetzt.

In bevorzugten Ausführungsformen wird die Faserbindepulver-Zusammensetzung in Verfahren zur Bindung von Fasermaterialien eingesetzt, bei denen
A) die Faserbindepulver-Zusammensetzung und das Fasermaterial in Wasser suspendiert werden, anschließend zu einem textilen Flächengebilde abgelegt werden, und die so erhaltenen Flächengebilde mittels Wärmebehandlung gegebenenfalls getrocknet und thermisch verfestigt werden, oder
B) die Faserbindepulver-Zusammensetzung und das Fasermaterial trocken gemischt werden, das Gemisch in Wasser suspendiert wird, anschließend zu einem textilen Flächengebilde abgelegt wird, und die so erhaltenen Flächengebilde mittels Wärmebehandlung getrocknet und gegebenenfalls thermisch verfestigt werden, oder
C) die Faserbindepulver-Zusammensetzung und das Fasermaterial trocken gemischt werden, das Gemisch anschließend zu einem textilen Flächengebilde trocken abgelegt wird und mit Wasser befeuchtet wird, oder die Faserbindepulver-Zusammensetzung in das ausgelegte Fasermaterial eingestreut wird und mit Wasser befeuchtet wird, und die so erhaltenen Flächengebilde mittels Wärmebehandlung getrocknet und gegebenenfalls thermisch verfestigt werden, oder
D) das Fasermaterial flächig ausgebreitet wird und mit der Faserbindepulver-Zusammensetzung bestreut wird, anschließend befeuchtet wird und gegen ein zweites Substrat, gegebenenfalls unter Anwendung einer erhöhten Temperatur oder eines erhöhten Druckes, laminiert wird.

Bei der Naßlege-Verfahrensvariante A) werden die Fasern und die Faserbindepulver-Zusammensetzung, oder die einzelnen Komponenten der Faserbindepulver-Zusammensetzung, in beliebiger Reihenfolge nacheinander, in kontinuierlicher oder diskontinuierlicher Verfahrensweise in Wasser suspendiert. Die Suspendierung der Fasern kann dabei gegebenenfalls unter Zuhilfenahme von ionischen oder nichtionischen Tensiden erfolgen. Bevorzugt werden Verfahren, in denen diskontinuierlich die Fasern und die Komponenten der Faserbindepulver-Zusammensetzung in einem Rührkessel mit Wasser zu einem Masterbatch gemischt werden und gegebenenfalls mit weiteren Additiven auf ein bestimmtes Eigenschaftsbild hin eingestellt werden. Anschließend wird die Suspension mit einem Festgehalt von vorzugsweise 0.01 bis 5 Gew%, vorzugsweise in kontinuierlicher Fahrweise, im Naßlegeverfahren zu einem Flächengebilde abgelegt.

Bei der Naßlege-Verfahrensvariante B) werden die Fasern und die Komponenten der Faserbindepulver-Zusammensetzung mittels mechanischer Durchmischung oder in einem turbulenten Luftstrom, kontinuierlich oder diskontinuierlich, trocken gemischt und diese Trockenmischung, gegebenenfalls unter Zuhilfenahme von ionischen oder nichtionischen Tensiden in Wasser suspendiert. Anschließend wird die Suspension mit einem Festgehalt von vorzugsweise 0.01 bis 5 Gew%, vorzugsweise in kontinuierlicher Fahrweise, im Naßlegeverfahren zu einem Flächengebilde abgelegt.

Wird die Faserbindepulver-Zusammensetzung im Trockenlegeverfahren gemäß Variante C) verwendet, werden die Fasern und die Komponenten der Faserbindepulver-Zusammensetzung mittels mechanischer Durchmischung oder in einem turbulenten Luftstrom, kontinuierlich oder diskontinuierlich, trocken gemischt. Anschließend wird das Gemisch im Trockenlegeverfahren, beispielsweise Airlayverfahren oder Krempelverfahren, zu einem textilen Flächengebilde abgelegt. Geeignet sind auch kontinuierliche Airlayverfahren wobei ein vorgeformtes, ungebundenes Vlies mit der Faserbindepulver-Zusammensetzung bestreut wird, anschließend erneut geöffnet wird und wiederum einem aerodynamischen Vliesbildeverfahren unterzogen wird. Möglich ist ferner das Kardieren von Fasern auf einer Krempelvorrichtung zu einem Vlies, gefolgt vom Bestreuen dieses Vlieses mit der Faserbindepulver-Zusammensetzung und Eintragen des aufgestreuten Pulvers in das Innere des Vlieses mittels Nadeln. Gegebenenfalls kann das so gekrempelte Vlies auch über einen Kreuzleger zu einem dickeren Vlies übereinandergelegt werden.

Die mittels den verschiedenen Varianten im Trockenlegeverfahren ausgelegten Fasergebilde werden anschließend mit Wasser oder Dampf befeuchtet um das Faserbindepulver zu aktivieren. Im allgemeinen wird mit 5 bis 60 Gew%, vorzugsweise 10 bis 35 Gew% Wasser, jeweils bezogen auf das Gesamtgewicht von Faser und Faserbindepulver, befeuchtet. Die Befeuchtung kann mittels Wasserdampf erfolgen oder auch mittels Tränken, Tauchen, Besprühen und Pflatschen, gegebenenfalls können auch Kombinationen der einzelnen Verfahren eingesetzt werden. Bei dicken Vliesstoffen wird das Dämpfen mit heißem Wasserdampf bevorzugt. Es kann auch so vorgegangen werden, daß im Trockenlegeverfahren zusammen mit den Fasern nur eine Komponente der Faserbindepulver-Zusammensetzung, vorzugsweise Komponente a), ausgelegt wird, und die andere Komponente, vorzugsweise Komponente b), bei der Befeuchtung in Wasser gelöst eingetragen wird.

Die Trocknung und Verfestigung des Fasermaterials erfolgt bei allen Verfahrensvarianten A) bis C) im allgemeinen bei Temperaturen von 80°C bis 260°C, vorzugsweise 120°C bis 200°C, gegebenenfalls unter einem Druck von bis zu 100 bar, wobei die Trocknungstemperatur und der anzuwendende Druck primär von der Art des Fasermaterials abhängen.

Bei der Laminierung werden die Fasern oder daraus gefertigte textile Flächengebilde wie Gewebe, nicht gewebte Vliesstoffe (Nonwovens) wie Gelege flächig ausgebreitet und mit der Faserbindepulver-Zusammensetzung bestreut, wobei das Pulver flächenförmig, punktförmig oder in Mustern aufgestreut werden kann. Zur Aktivierung des Binders wird in der oben angegebenen Art und Weise befeuchtet und anschließend ein weiteres Substrat aufgelegt. Die Verfestigung der Laminate erfolgt ebenfalls unter den oben angegebenen Temperatur- und Druckbedingungen.

Als Substrate eignen sich Gewebe und Nonwovens wie Glasfasergewebe und Glasfaservliese, Kunststoff-Folien wie Polyesterfolien oder coronarbehandelte Polyolefinfolien, Holzfaserplatten wie Preßspanplatten oder MDF-Platten (MDF = medium density fiber board), geschäumte flächige Materialien wie Polyurethanschäume und Polyvinylalkoholschäume.

Bei der Laminierung können zwei gleiche oder unterschiedliche flächige Fasergebilde miteinander verklebt werden. Beispiele hierfür sind Dämmstoffe im Automobilbau aus Reißbaumwolle, die mit einem Deckvlies dauerhaft kaschiert werden. Es können auch Fasergebilde mit nicht-fasrigen Substraten verklebt werden. Beispiele hierfür sind die Verklebung von Glasfasern auf dekorative Deckfolien oder Deckenplatten im Bereich der Bauisolierung oder Verklebungen von Geweben gegenüber Leder in der Schuhindustrie.

Bei der beanspruchten Faserbindepulver-Zusammensetzung liegen zwei an sich reaktive Komponenten so vorteilhaft in fester Form nebeneinander vor, daß diese in dieser Form beliebig lange lagerfähig sind und erst beim Kontakt mit Wasser aktiviert werden. Die in wäßriger Umgebung einsetzende Reaktion läuft spontan und rasch ab. Im Gegensatz zu den im Stand der Technik diskutierten Pulvern vernetzt die erfindungsgemäße Faserbindepulver-Zusammensetzung bereits bei Suspendierung in Wasser. Ferner findet im erfindungsgemäßen Polymeren die Vernetzungsreaktion mit den Schutzkolloiden an der Partikeloberfläche statt und nicht die wesentlich langsamere Reaktion mit den funktionellen Gruppen im Teilcheninneren.

Überraschend ist die gute Suspendier- oder Dispergierbarkeit der Faserbindepulver-Zusammensetzung in Wasser sowie die gleichmäßige Verteilung der Bindepulvers auf der Faseroberfläche. Beide Effekte sind überraschend, da aufgrund der rasch ablaufenden Vernetzungsreaktion zwischen den beiden in der Pulverzubereitung enthaltenden Komponenten eine Klumpenbildung beim Kontakt mit Wasser erwartet werden mußte.

Die nachfolgenden Beispiele dienen der weiteren Erläuterung der Erfindung:

Die Bindung von Glasfasern mit Faserbindepulver wurde in einem Naßlegeprozeß untersucht:

### Vliesherstellung:

0.03 g eines kationischen Tensids (Dehyquart SP) wurden in ein Becherglas mit Hilfe einer Pipette eingewogen und anschließend mit 200 g Wasser versetzt. Die Tensidlösung wurde bei 600 Upm gerührt. 1.0 g Glasfasern wurden zugegeben. Nach etwa 1 Minute Rührzeit wurde die Rührgeschwindigkeit der Glasfasersuspension auf 800 Upm erhöht. Dann wurden die beiden Komponenten a) und b) der Faserbindepulver-Zusammensetzung zugegeben und weitere 15 Minuten gerührt. Der pH-Wert der Suspension wurde gemessen. Nach Beendigung der Rührzeit wurde die Glasfasersuspension über ein Perlonsieb abgesiebt. Das nasse Glasfaservlies wurde in eine Alu-Schale gegeben und 3 Stunden bei 150°C getrocknet.

Es wurden folgende Pulver als Komponente a) eingesetzt:
Polymerpulver 1:
   Vinylacetatpolymerisat mit 1 Gew% N-Methylolacrylamid, stabilisiert mit 8 Gew% Polyvinylalkohol (Höppler-Viskosität 25 mPas; Verseifungsgrad 92 %).
Polymerpulver 2:
   Ethylen-Vinylacetat-Copolymer mit 15 Gew% Ethylen, stabilisiert mit 11 Gew% Polyvinylalkohol (Höppler-Viskosität 4 mPas; Verseifungsgrad 82 %).
Polymerpulver 3:
   Vinylacetat-Homopolymerisat, stabilisiert mit 11 Gew% Polyvinylalkohol (Höppler-Viskosität 4 mPas; Verseifungsgrad 82 %).
Polymerpulver 4:
   Vinylacetatpolymerisat mit 1 Gew% N-Methylolacrylamid, stabilisiert mit 8 Gew% Polyvinylalkohol (Höppler-Viskosität 56 mPas; Verseifungsgrad 98 %).
Polymerpulver 5:
   Polyvinylacetatpulver mit maskierten Aldehyden (Glutaraldehydbis(natriumhydrogensulfit) analog DE-A 19545608.
Polymerpulver 6:
   Emulgatorstabilisiertes, carboxylgruppenhaltiges Styrol-Acrylat-Pulver mit Epoxidvernetzer.

### Festigkeit des Glasfaservlies:

Die Festigkeit des Glasfaservlies wurde manuell beurteilt und mit folgendem Schema benotet:
1= sehr gut; 2 = gut; 3 = nicht mehr zufriedenstellend; 4 = schlecht.

Die Testergebnisse sind in Tabelle 1 zusammengefaßt:

Die Ergebnisse aus Tabelle 1 zeigen die Verbesserung der Faserbindung bei Einsatz der Kombination der Komponenten a) und b) im Vergleich zur Faserbindung nur mit Bindemittel a).
In den Vergleichsbeispielen 15 bis 21 wurde gegen herkömmliche vernetzbare Bindemittel-Kombinationen getestet. Die erfindungsgemäße Kombination ist überlegen gegenüber herkömmlichen Bindemitteln mit Epoxidvernetzer (Vergleichsbeispiele 15 bis 18), überlegen gegenüber herkömmlichen maskierten Vernetzersystemen (Vergleichsbeispiel 19) und überlegen gegenüber epoxidvernetzbaren Bindemitteln ohne Schutzkolloid.

**Tabelle 1**

| Beispiel | Komponente a) | Menge | Komponente b) | Menge | pH | Note |
|---|---|---|---|---|---|---|
| V.Bsp. 1 | Pulver 1 | 0.25g | | | 8 | 4 |
| Bsp. 2 | Pulver 1 | 0.25g | Borax | 0.0025g | 8 | 2 |
| Bsp. 3 | Pulver 1 | 0.25g | Borax | 0.0125g | 8 | 2 |
| Bsp. 4 | Pulver 1 | 0.25g | Borax | 0.025g | 8 | 2 |
| Bsp. 5 | Pulver 1 | 0.25g | Borax | 0.05g | 8 | 2 |
| V.Bsp 6 | Pulver 2 | 0.25g | | | 7 | 3 |
| Bsp. 7 | Pulver 2 | 0.25g | Borax | 0.0025g | 8 | 2-3 |
| Bsp. 8 | Pulver 2 | 0.25g | Borax | 0.0125g | 8 | 2 |
| V.Bsp. 9 | Pulver 3 | 0.25g | | | 5 | 3 |
| Bsp. 10 | Pulver 3 | 0.25g | Borax | 0.0025g | 8 | 2-3 |
| Bsp. 11 | Pulver 3 | 0.25g | Borax | 0.0125g | 8 | 2 |
| V.Bsp. 12 | Pulver 4 | 0.25g | | | 6 | 3 |
| Bsp. 13 | Pulver 4 | 0.25g | Borax | 0.0025g | 8 | 2-3 |
| Bsp. 14 | Pulver 4 | 0.25g | Borax | 0.0125g | 8 | 1-2 |
| V.Bsp. 15 | Pulver 1 | 0.25g | Glyoxal | 0.0025g | 3.5 | 3-4 |
| V.Bsp. 16 | Pulver 1 | 0.25g | Glyoxal | 0.0125g | 4.7 | 3-4 |
| V.Bsp. 17 | Pulver 1 | 0.25g | Glyoxal | 0.025g | 4.8 | 3-4 |
| V.Bsp. 18 | Pulver 1 | 0.25g | Glyoxal | 0.05g | 4.9 | 3-4 |
| V.Bsp. 19 | Pulver 5 | 0.25g | AlCl₃ | 0.0125g | 4 | 3 |
| V.Bsp. 20 | Pulver 6 | 0.25g | | | 6 | 4 |
| V.Bsp. 21 | Pulver 6 | 0.25g | Borax | 0.025g | 8 | 4 |

Die Bindekraft der Faserbindepulver-Zusammensetzung wurde in Faserformkörpern getestet:

### Geprüfte Faserbindepulver-Zusammensetzungen:

### Beispiel 22:

950 g Polymerpulver 1 (Vinylacetatpolymerisat mit 1 Gew% N-Methylolacrylamid, stabilisiert mit 8 Gew% Polyvinylalkohol (Höppler-Viskosität 25 mPas; Verseifungsgrad 92 %)) wurden in einem Pflugscharmixer mit 50 g Borax vermischt.

### Beispiel 23:

950 g Polymerpulver 1 wurden in einem Pflugscharmixer mit 50 g Aluminiumtrichlorid-Hexahydrat vermischt.

### Vergleichsbeispiel 24:

Es wurde nur Polymerpulver 1 ohne Komponente b) eingesetzt.

### Herstellung der Faserformkörper:

Zur Herstellung von Preßplatten wurden 118 g Reißbaumwolle mit 13.2 g Bindepulver aus den Beispielen 22, 23 und Vergleichsbeispiel 24 vermischt und auf einer Fläche von 30 x 30 cm ausgebreitet. Danach wurden die Faser/Pulvermischungen mit Wasser (Sprühauftrag) angefeuchtet und sofort anschließend bei Temperaturen von ca. 180°C und bei Drücken von ca. 36 bar 5 Minuten lang verpreßt, so daß 2 mm dicke, 1390 g/m² schwere Platten entstanden.

### Beispiel 25:

Bei der Herstellung der Faserformkörper wurde nur Polymerpulver 1 als Faserbinder eingesetzt, aber anstelle mit Wasser mit einer 5 %-igen Zirkoniumacetatlösung besprüht.

### Prüfmethoden:

### Prüfung der Höchstzugkraft HZK:

Aus den verpreßten Faserformkörpern wurden Prüfkörper (Abmessungen: 10 x 100 mm ) herausgestanzt und bei Raumtemperatur auf einer Zwick-Zugprüfmaschine analog DIN 53857 geprüft.

### Prüfung der Wasseraufnahme:

Zur Bestimmung der Wasseraufnahme wurden Faserformkörper (Abmessung: 50 x 20 mm) für 1 h bzw. 24 h in Wasser gelagert und die Gewichtszunahme infolge Wasserquellung gravimetrisch bestimmt.

### Prüfung des Wärmestandvermögens:

Zur Prüfung des Wärmestandvermögens wurden 240 x 20 mm lange Streifen aus den Faserformkörpern geschnitten. Diese Streifen wurden waagerecht so auf einer planen Unterlage fixiert, daß die Streifen mit einer Länge von 100 mm über den Rand der Unterlage überstanden, und mit einem 40 g Gewicht belastet. Das Wärmestandvermögen wurde durch Messung der Durchbiegung d nach einer einstündigen Lagerung bei T = 120°C ermittelt. Die Durchbiegung d ist die Strecke mit der sich der Streifen mit seinem Ende in 100 mm Abstand von der Unterlage unter der Belastung durchbiegt.

Die Prüfergebnisse sind in Tabelle 2 zusammengefaßt:

**Tabelle 2**

| Beispiel | HZK [N] | Wasseraufnahme [%] | Wärmestand [mm] |
|---|---|---|---|
| Bsp. 22 | 954 | 59 | 22.0 |
| Bsp. 23 | 964 | 59 | 21.0 |
| V.Bsp. 24 | 630 | 59 | 31.0 |
| Bsp. 25 | 1081 | 57 | 23.5 |

Die Prüfergebnisse aus Tabelle 2 zeigen deutlich die Verbesserung der mechanischen Festigkeit (Höchstzugkraft, Wärmestand) bei Verwendung der Faserbindepulver-Zusammensetzung im Vergleich zu Bindepulver ohne Komponente b) (Vergleichsbeispiel 24) .

## Patentansprüche

1. Faserbindepulver-Zusammensetzung zur Verwendung für die Verfestigung von Fasermaterialien enthaltend
a) ein Polymerpulver auf der Basis eines Polyvinylalkohol-stabilisierten Polymerisats von einem oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide, Olefine, Diene, und
b) eine bei Raumtemperatur feste anorganische Verbindung, die mit den OH-Gruppen des Polyvinylalkohols nach dem Einbringen des Pulvers in Wasser eine chemische Bindung eingeht,
wobei keine wasserlösliche, mindestens bifunktionelle, maskierte Aldehyde mit wenigstens 3 Kohlenstoffatomen enthalten sind.

2. Faserbindepulver-Zusammensetzung nach Anspruch 1, **dadurch gekennzeichnet, daß** als Komponente a) ein Polymerpulver auf der Basis eines Polyvinylalkohol-stabilisierten Polymerisats aus der Gruppe Vinylacetat-Polymerisate, Vinylacetat-Ethylen-Copolymere mit einem Ethylengehalt von 1 bis 60 Gew%, Vinylester-Ethylen-Vinylchlorid-Copolymere mit einem Ethylengehalt von 1 bis 40 Gew% und einem Vinylchlorid-Gehalt von 20 bis 90 Gew%, Vinylacetat-Copolymere mit 1 bis 50 Gew% eines oder mehrerer copolymerisierbarer Vinylester und gegebenenfalls noch 1 bis 40 Gew% Ethylen, Vinylester-Acrylsäureester-Copolymerisate mit 30 bis 90 Gew% Vinylester und 1 bis 60 Gew% Acrylsäureester und gegebenenfalls noch 1 bis 40 Gew% Ethylen, Vinylester-Acrylsäureester-Copolymerisate mit 30 bis 75 Gew% Vinylacetat und 1 bis 30 Gew% weitere Vinylester und gebenenfalls noch 1 bis 40 Gew% Ethylen, Polymerisate von n-Butylacrylat oder 2-Ethylhexylacrylat, Copolymerisate von Methylmethacrylat mit n-Butylacrylat und/oder 2-Ethylhexylacrylat, Vinylchlorid-Ethylen-Copolymere, Vinylchlorid/Acrylat-Copolymere, Styrol-Butadien-Copolymere und Styrol-Acrylsäureester-Copolymere mit einem Styrol-Gehalt von jeweils 10 bis 70 Gew% enthalten ist.

3. Faserbindepulver-Zusammensetzung nach Anspruch 1 oder 2, **dadurch gekennzeichnet, daß** das Polymerisat noch 0.05 bis 10.0 Gew%, bezogen auf das Gesamtgewicht der Monomeren, Hilfsmonomere aus der Gruppe umfassend ethylenisch ungesättigte_Mono- und Dicarbonsäuren und deren Amide, ethylenisch ungesättigte Sulfonsäuren und deren Salze, Acryloxypropyltri-(alkoxy)- und Methacryloxypropyltri(alkoxy)-Silane, Vinyltrialkoxysilane und Vinylmethyldialkoxysilane, N-Methylolacrylamid (NMA), N-Methylolmethacrylamid (NMMA), N-Methylolallylcarbamat, Alkylether von N-Methylolacrylamid oder N-Methylolmethacrylamid sowie deren Isobutoxyether oder n-Butoxyether enthält.

4. Faserbindepulver-Zusammensetzung nach Anspruch 1 bis 3, **dadurch gekennzeichnet, daß** als Polyvinylalkohol ein teilhydrolisierter Polyvinylalkohol mit einem Hydrolysegrad von 75 bis 99 Mol%, und einer Höpplerviskosität von 1 bis 60 mPas enthalten ist.

5. Faserbindepulver-Zusammensetzung nach Anspruch 1 bis 4, **dadurch gekennzeichnet, daß** als Komponente b) eine anorganische Verbindung aus der Gruppe umfassend bei Raumtemperatur pulverförmige, wasserlösliche Verbindungen von Bor, Aluminium, Chrom und Zirkonium, deren Wasserlöslichkeit bei Normalbedingungen mindestens 1 g pro Liter Wasser beträgt, enthalten ist.

6. Faserbindepulver-Zusammensetzung nach Anspruch 1 bis 4, **dadurch gekennzeichnet, daß** als Komponente b) eine anorganische Verbindung aus der Gruppe umfassend Borsäure, Borax, Borsäurekomplexe zwei- und mehrzähniger Liganden, Aluminiumnitrat, Aluminiumchlorid, Zirkonoxychlorid, Zirkoniumacetat enthalten ist.

7. Faserbindepulver-Zusammensetzung nach Anspruch 1 bis 6, **dadurch gekennzeichnet, daß** eine pulverförmige, wasserlösliche Substanz als pH-Puffer enthalten ist.

8. Verfahren zur Verfestigung von Fasermaterialien unter Verwendung von Faserbindepulver-Zusammensetzungen gemäß Anspruch 1 bis 7, **dadurch gekennzeichnet, daß** die Verfestigung in Naßlegeverfahren, in Trockenlegeverfahren unter anschließender Befeuchtung und mittels Kaschierung von Fasermaterialien erfolgt.

9. Verfahren zur Verfestigung von Fasermaterialien gemäß Anspruch 8, **dadurch gekennzeichnet, daß** die Komponenten a) und b) der Faserbindepulver-Zusammensetzung als Mischung oder getrennt zum Fasermaterial zugegeben werden.

10. Verfahren zur Verfestigung von Fasermaterialien gemäß Anspruch 8 und 9, **dadurch gekennzeichnet, daß**
A) die Faserbindepulver-Zusammensetzung und das Fasermaterial in Wasser suspendiert werden, anschließend zu einem textilen Flächengebilde abgelegt werden, und die so erhaltenen Flächengebilde mittels Wärmebehandlung getrocknet und gegebenenfalls thermisch verfestigt werden, oder
B) die Faserbindepulver-Zusammensetzung und das Fasermaterial trocken gemischt werden, das Gemisch in Wasser suspendiert wird, anschließend zu einem textilen Flächengebilde abgelegt wird, und die so erhaltenen Flächengebilde mittels Wärmebehandlung getrocknet und gegebenenfalls thermisch verfestigt werden, oder
C) die Faserbindepulver-Zusammensetzung und das Fasermaterial trocken gemischt werden, das Gemisch anschließend zu einem textilen Flächengebilde trocken abgelegt wird und mit Wasser befeuchtet wird, oder die Faser-bindepulver-Zusammensetzung in das ausgelegte Fasermaterial eingestreut wird und mit Wasser befeuchtet wird, und die so erhaltenen Flächengebilde mittels Wärmebehandlung getrocknet und gegebenenfalls thermisch verfestigt werden, oder
D) das Fasermaterial flächig ausgebreitet wird und mit der Faserbindepulver-Zusammensetzung bestreut wird, anschließend befeuchtet wird und gegen ein zweites Substrat, gegebenenfalls unter Anwendung einer erhöhten Temperatur oder eines erhöhten Druckes, laminiert wird.

## Claims

1. Fibre bonding powder composition for consolidating fibre materials, comprising
a) a polymer powder based on a polyvinyl alcohol stabilized polymer of one or more monomers selected from the group consisting of the vinyl esters of branched or unbranched carboxylic acids having 1 to 12 carbon atoms, the esters of acrylic acid and methacrylic acid with branched or unbranched alcohols having 1 to 12 carbon atoms, aromatic vinyl compounds, vinyl halides, olefins and dienes, and
b) an inorganic compound which is solid at room temperature and which enters a chemical bond with the OH groups of the polyvinyl alcohol on introduction of said powder into water, no water-soluble, at least bifunctional, masked aldehydes having at least 3 carbon atoms being present.

2. Fibre bonding powder composition of Claim 1, **characterized in that** component a) is a polymer powder based on a polyvinyl alcohol stabilized polymer selected from the group consisting of vinyl acetate polymers, vinyl acetate-ethylene copolymers having an ethylene content of 1 to 60% by weight, vinyl esterethylene-vinyl chloride copolymers having an ethylene content of 1 to 40% by weight and a vinyl chloride content of 20 to 90% by weight, vinyl acetate copolymers with 1 to 50% by weight of one or more copolymerizable vinyl esters and optionally 1 to 40% by weight of ethylene, vinyl ester-acrylic ester copolymers containing 30 to 90% by weight of vinyl ester and 1 to 60% by weight of acrylic ester and optionally 1 to 40% by weight of ethylene, vinyl ester-acrylic ester copolymers containing 30 to 75% by weight of vinyl acetate and 1 to 30% by weight of other vinyl esters and optionally 1 to 40% by weight of ethylene, polymers of n-butyl acrylate or 2-ethylhexyl acrylate, copolymers of methyl methacrylate with n-butyl acrylate and/or 2-ethylhexyl acrylate, vinyl chloride-ethylene copolymers, vinyl chloride-acrylate copolymers, styrene-butadiene copolymers and styrene-acrylic ester copolymers having a styrene content of 10 to 70% by weight in each case.

3. Fibre bonding powder composition of Claim 1 or 2, **characterized in that** said polymer additionally contains 0.05 to 10.0% by weight, based on the total weight of the monomers, of comonomers selected from the group consisting of ethylenically unsaturated mono- and dicarboxylic acids and their amides, ethylenically unsaturated sulphonic acids and their salts, acryloyloxypropyltri(alkoxy) - and methacryloyloxypropyltri(alkoxy) -silanes, vinyltrialkoxysilanes and vinylmethyldialkoxysilanes, N-methylolacrylamide (NMA), N-methylolmethacrylamide (NMMA), N-methylolallylcarbamate, alkyl ethers of N-methylolacrylamide or N-methylolmethacrylamide and also their isobutoxy ethers or n-butoxy ethers.

4. Fibre bonding powder composition of any of Claims 1 to 3, **characterized in that** the polyvinyl alcohol is a partially hydrolysed polyvinyl alcohol having a degree of hydrolysis of 75 to 99 mol% and a Höppler viscosity of 1 to 60 mPas.

5. Fibre bonding powder composition of any of Claims 1 to 4, **characterized in that** component b) is an inorganic compound selected from the group consisting of water-soluble compounds of boron, aluminium, chromium and zirconium which are pulverulent at room temperature and whose solubility in water under standard conditions is not less than 1 g per litre of water.

6. Fibre bonding powder composition of any of Claims 1 to 4, **characterized in that** component b) is an inorganic compound selected from the group consisting of boric acid, borax, boric acid complexes of bi- and more highly dentate ligands, aluminium nitrate, aluminium chloride, zirconium oxychloride and zirconium acetate.

7. Fibre bonding powder composition of any of Claims 1 to 6, **characterized in that** it comprises a pulverulent, water-soluble substance as pH buffer.

8. Process for consolidating fibre materials using fibre bonding powder compositions according to any of Claims 1 to 7, **characterized in that** it comprises effecting the consolidating in wet laid processes, in dry laid processes with subsequent moistening and by lamination of fibre materials.

9. Process of Claim 8, **characterized in that** said components a) and b) of said fibre bonding powder composition are added mixed or separately to the fibre material.

10. Process of Claim 8 or 9, **characterized in that**
A) said fibre bonding powder composition and said fibre material are suspended in water, then laid down to form a textile sheet material and the sheet materials thus obtained are by heat treatment dried and optionally thermally consolidated, or
B) said fibre bonding powder composition and said fibre material are dry mixed, the mixture is suspended in water and then laid down to form a textile sheet material, and the sheet materials thus obtained are by heat treatment dried and optionally thermally consolidated, or
C) said fibre bonding powder composition and said fibre material are dry mixed, the mixture is subsequently laid down dry to form a textile sheet material and moistened with water, or said fibre bonding powder composition is sprinkled into the laid out fibre material and moistened with water, and the sheet materials thus obtained are by heat treatment dried and optionally thermally consolidated, or
D) said fibre material is spread out in the form of a sheet and besprinkled with said fibre bonding powder composition, then moistened and laminated to a second substrate, optionally with employment of an elevated temperature or elevated pressure.

## Revendications

1. Composition de poudre pour liage de fibres, pour utilisation pour la consolidation de matériaux fibreux, contenant
a) une poudre de polymère à base d'un polymère, stabilisé par du poly(alcool vinylique), d'un ou plusieurs monomères choisis dans le groupe constitué par les esters vinyliques d'acides carboxyliques ramifiés ou non ramifiés ayant de 1 à 12 atomes de carbone, les esters de l'acide acrylique et de l'acide méthacrylique avec des alcools ramifiés ou non ramifiés ayant de 1 à 12 atomes de carbone, les composés vinylaromatiques, halogénures de vinyle, oléfines, diènes, et
b) un composé minéral solide à la température ambiante, qui entre en une liaison chimique avec les groupes OH du poly(alcool vinylique) après l'introduction de la poudre dans de l'eau, aucun aldéhyde comportant au moins 3 atomes de carbone, hydrosoluble, au moins bifonctionnel, masqué, n'étant contenu.

2. Composition de poudre pour liage de fibres selon la revendication 1, **caractérisée en ce qu'**elle contient en tant que composant a) une poudre de polymère à base d'un polymère stabilisé par du poly (alcool vinylique), choisi dans le groupe constitué par les polymères d'acétate de vinyle, les copolymères acétate de vinyle/éthylène ayant une teneur en éthylène de 1 à 60% en poids, les copolymères ester vinylique/éthylène/chlorure de vinyle ayant une teneur en éthylène de 1 à 40% en poids et une teneur en chlorure de vinyle de 20 à 90% en poids, les copolymères d'acétate de vinyle comportant de 1 à 50% en poids d'un ou plusieurs esters vinyliques copolymérisables et éventuellement encore 1 à 40% en poids d'éthylène, les copolymères ester vinylique/ester d'acide acrylique comportant de 30 à 90% en poids d'ester vinylique et de 1 à 60% en poids d'ester d'acide acrylique et éventuellement encore 1 à 40% en poids d'éthylène, les copolymères ester vinylique/ester d'acide acrylique comportant de 30 à 75% en poids d'acétate de vinyle et de 1 à 30% en poids d'autres esters vinyliques et éventuellement encore 1 à 40% en poids d'éthylène, les polymères d'acrylate de n-butyle et/ou d'acrylate de 2-éthylhexyle, les copolymères chlorure de vinyle/éthylène, les copolymères chlorure de vinyle/acrylate, les copolymères styrène/butadiène et les copolymères styrène/ester d'acide acrylique ayant chacun une teneur en styrène allant de 10 à 70% en poids.

3. Composition de poudre pour liage de fibres selon la revendication 1 ou 2, **caractérisée en ce que** le polymère contient encore de 0,05 à 10,0% en poids, par rapport au poids total des monomères, de monomères auxiliaires choisis dans le groupe comprenant les acides mono- et dicarboxyliques à insaturation éthylénique et leurs amides, les acides sulfoniques à insaturation éthylénique et leurs sels, les acryloxypropyltri(alcoxy)- et méthacryloxypropyltri(alcoxy)silanes, vinyltrialcoxysilanes et vinylméthyldialcoxysilanes, le N-méthylolacrylamide (NMA), le N-méthylolméthacrylamide (NMMA), le N-méthylolallylcarbamate, les éthers alkyliques de N-méthylolacrylamide ou le N-méthylolméthacrylamide ainsi que leurs isobutoxyéthers ou n-butoxyéthers.

4. Composition de poudre pour liage de fibres selon l'une quelconque des revendications 1 à 3, **caractérisée en ce qu'**un poly (alcool vinylique) partiellement hydrolysé ayant un degré d'hydrolyse de 75 à 99% en moles et une viscosité Höppler de 1 à 60 mPa.s est contenu en tant que poly(alcool vinylique).

5. Composition de poudre pour liage de fibres selon l'une quelconque des revendications 1 à 4, **caractérisée en ce qu'**un composé minéral choisi dans le groupe comprenant des composés hydrosolubles pulvérulents à la température ambiante, contenant du bore, de l'aluminium, du chrome et du zirconium, dont la solubilité dans l'eau, dans les conditions normales, est d'au moins 1 g par litre d'eau, est contenu en tant que composant b).

6. Composition de poudre pour liage de fibres selon l'une quelconque des revendications 1 à 4, **caractérisée en ce qu'**un composé minéral choisi dans le groupe comprenant l'acide borique, le borax, des complexes d'acide borique avec des ligands bidentés et polydentés, le nitrate d'aluminium, le chlorure d'aluminium, l'oxychlorure de zirkonium, l'acétate de zirconium, est contenu en tant que composant b).

7. Composition de poudre pour liage de fibres selon l'une quelconque des revendications 1 à 6, **caractérisée en ce qu'**une substance pulvérulente hydrosoluble est contenu en tant que tampon de pH.

8. Procédé pour la consolidation de matériaux fibreux avec utilisation de compositions de poudres pour liage de fibres selon l'une quelconque des revendications 1 à 7, **caractérisé en ce que** la consolidation s'effectue dans des procédés de nappage en humide, dans des procédés de nappage à sec avec mouillage subséquent et au moyen de calandrage de matériaux fibreux.

9. Procédé pour la consolidation de matériaux fibreux selon la revendication 8, **caractérisé en ce que** les composants a) et b) sont ajoutés sous forme de mélange à la composition de poudre pour liage de fibres ou séparément au matériau fibreux.

10. Procédé pour la consolidation de matériaux fibreux selon les revendications 8 et 9, **caractérisé en ce que**
A) on met en suspension la composition de poudre pour liage de fibres et le matériau fibreux dans de l'eau, puis on les dispose en un produit plan textile, et les produits plans ainsi obtenus sont séchés à l'aide d'un traitement thermique et éventuellement consolidés thermiquement, ou
B) on mélange à sec la composition de poudre pour liage de fibres et le matériau fibreux, on met le mélange en suspension dans de l'eau, ensuite on le dispose en un produit plan textile, et les produits plans ainsi obtenus sont séchés à l'aide d'un traitement thermique et éventuellement consolidés thermiquement, ou
C) on mélange à sec la composition de poudre pour liage de fibres et le matériau fibreux, ensuite on dispose à sec le mélange en un produit plan textile et on le mouille avec de l'eau, ou on introduit la composition de poudre pour liage de fibres dans le matériau fibreux étalé et on le mouille avec de l'eau, et les produits plans ainsi obtenus sont séchés à l'aide d'un traitement thermique et éventuellement consolidés thermiquement, ou
D) on étale à plat le matériau fibreux et on répand sur celui-ci la composition de poudre pour liage de fibres, ensuite on le mouille et on l'applique par laminage contre un second support, éventuellement en utilisant une température élevée ou une pression élevée.
